# EUROPEAN PATENT APPLICATION

(11) **EP 4 621 140 A1**
(43) Date of publication of application: **24.09.2025**
(21) Application number: 25162823.6
(22) Date of filing: 11.03.2025
(51) Int. Cl.: E02F 9/08

(54) **WORK MACHINE**

(30) Priority: 18.03.2024 JP 2024042662
(71) Applicant: Yanmar Holdings Co., Ltd., Osaka-shi, Osaka (JP)
(72) Inventor: KANAI, Daiki, Chikugo-shi (JP)
(74) Representative: Sekiguchi, Kazuya

(57) **Abstract**

Provided is an electric work machine that can easily secure an arrangement space for two charging connectors in spite of its compact configuration, even when a large-capacity battery unit is mounted.

The work machine includes an electric motor driven by electric power output from a battery unit and two charging connectors that supply electric power to the battery unit. The two charging connectors are arranged side by side facing in the same direction on the side of a lid that can be opened and closed on the side of a machine room housing the battery unit, while being arranged obliquely to the lid.

## Description

### TECHNICAL FIELD

The present invention relates to a work machine.

### BACKGROUND ART

An electric work machine equipped with a plurality of charging ports for supplying electric power to a battery has been proposed in the related art. For example, an electric excavator disclosed in Patent Document 1 includes two charging ports: a vehicle inlet for normal charging and a vehicle inlet for quick charging, on a side surface of a cabin of an upper revolving body.

### PRIOR ART DOCUMENT

### PATENT DOCUMENT

Patent Document 1: Japanese Unexamined Patent Publication No. 2023-134163

### SUMMARY OF INVENTION

### TECHNICAL PROBLEM

In the electric excavator of Patent Document 1, the two charging ports are disposed facing straight to the side (for example, to the left). Therefore, it is necessary to secure a wide space in the left-right direction of the machine body for the arrangement of the two charging ports.

On the other hand, in recent years, the capacity (size) of battery units has been increasing in small-sized electric excavators. In small-sized electric excavators in which the space for housing each device is limited in the upper revolving body (especially in the machine room), if the battery unit becomes larger, the empty space in the machine room becomes narrower, and it becomes difficult to secure an arrangement space of the two charging ports. In this respect, there is room for improvement in the configuration of Patent Document 1 in which it is necessary to secure the wide space in the left-right direction for the arrangement of the two charging ports.

The present invention has been made in order to solve the above-described problem, and an object of the present invention is to provide an electric work machine that can easily secure an arrangement space for two charging connectors even in a case in which a large-capacity battery unit is mounted while having a compact configuration.

### SOLUTION TO PROBLEM

A work machine according to one aspect of the present invention is a work machine including an electric motor driven by electric power output from a battery unit, and further including two charging connectors that supply electric power to the battery unit, in which the two charging connectors are disposed side by side in the same direction in a machine room housing the battery unit on the side of a lid which is installed in a manner capable of being opened and closed on the side of the machine room, while being arranged obliquely to the lid.

### ADVANTAGEOUS EFFECTS OF INVENTION

An electric work machine that can easily secure an arrangement space for two charging connectors in spite of its compact configuration, even when a large-capacity battery unit is mounted, can be provided.

### BRIEF DESCRIPTION OF DRAWINGS

FIG. 1 is a side view illustrating a schematic configuration of a hydraulic excavator as an example of a work machine according to an embodiment of the present invention.
FIG. 2 is a perspective view of the hydraulic excavator as viewed obliquely from the front.
FIG. 3 is a block diagram schematically illustrating a configuration of an electric system and a hydraulic system of the hydraulic excavator.
FIG. 4 is an enlarged perspective view illustrating a right hood of the hydraulic excavator.
FIG. 5 is a perspective view illustrating an internal configuration of a machine room of the hydraulic excavator.
FIG. 6 is a plan view illustrating an internal configuration of the machine room.
FIG. 7 is a perspective view illustrating a right hood of the hydraulic excavator in an enlarged manner, while illustrating another example of arrangement of a charging connector and the like in the machine room.
FIG. 8 is a perspective view illustrating a configuration in the vicinity of the charging connector in the machine room.
FIG. 9 is a plan view illustrating a configuration in the vicinity of the charging connector in the machine room.

### DESCRIPTION OF EMBODIMENTS

An embodiment of the present invention will be described below with reference to the drawings.

### 1. Work Machine

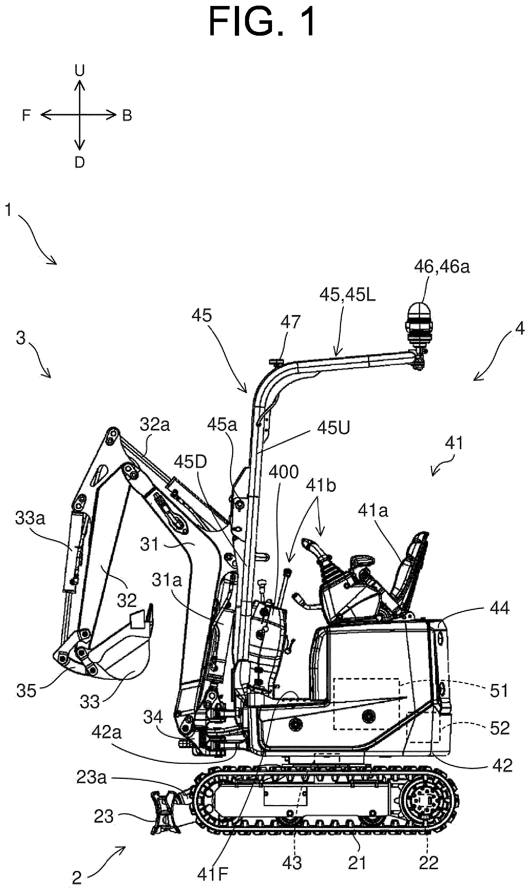

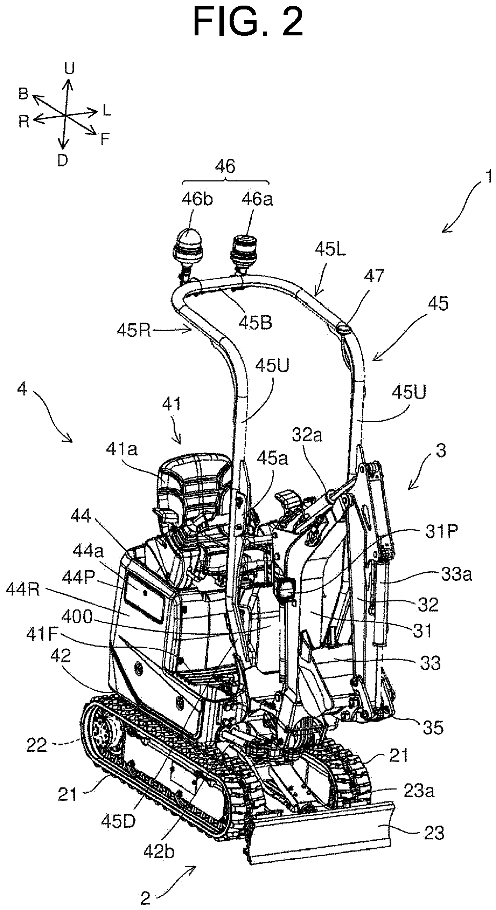

FIG. 1 is a side view illustrating a schematic configuration of a hydraulic excavator (electric excavator) 1 which is an example of an electric work machine of the present embodiment. FIG. 2 is a perspective view of the hydraulic excavator 1 as viewed obliquely from the front. The hydraulic excavator 1 includes a lower traveling body 2, a work machine 3, and an upper revolving body 4.

Here, directions are defined as follows. A direction in which an operator (operating person, driver) is seated in a driver seat 41a of the upper revolving body 4 faces the front is forward, and the opposite direction is backward. Therefore, in the non-revolving state of the upper revolving body 4 (revolving angle is zero degree) relative to the lower traveling body 2, the front-back direction of the upper revolving body 4 coincides with the direction in which the lower traveling body 2 moves forward and backward. The left side is referred to as "left" and the right side as "right", respectively, when viewed from the operator seated in the driver seat 41a. A gravity direction perpendicular to the front-rear direction and the right-left direction is defined as an up-down direction, an upstream side in the gravity direction is defined as "up", and a downstream side is defined as "down". In the drawings, the hydraulic excavator 1 is illustrated in the non-revolving state of the upper revolving body 4 with respect to the lower traveling body 2. In addition, in the drawings, the symbol "F" represents front, "B" represents back, "L" represents left, "R" represents right, "U" represents up, and "D" represents down.

The lower traveling body 2 includes a pair of left and right crawlers 21 and a pair of left and right traveling motors 22. Each traveling motor 22 is a hydraulic motor. The left and right traveling motors 22 drive the left and right crawlers 21, respectively, to move the hydraulic excavator 1 forward and backward. The lower traveling body 2 further includes a blade 23 for leveling the ground, and a blade cylinder 23a for rotating the blade 23 in the up-down direction.

The work machine 3 includes a boom 31, an arm 32, and a bucket 33. By driving the boom 31, the arm 32, and the bucket 33 independently, an excavation work of earth, sand, and the like can be performed. Instead of the bucket 33, an attachment can be attached to the work machine as appropriate. For example, when a breaker is attached as the attachment, a crushing work or a demolishing work by a breaker can be performed.

The boom 31, the arm 32, and the bucket 33 are driven by a boom cylinder 31a, an arm cylinder 32a, and a bucket cylinder 33a, respectively. The boom cylinder 31a, the arm cylinder 32a, and the bucket cylinder 33a are constituted by hydraulic cylinders.

A base end portion of the boom 31, that is, an end portion of the boom 31 on a side opposite to a side connected to the arm 32 is connected in a swingable manner to a leading end portion 42a of a revolving frame 42 via a boom bracket 34. That is, the hydraulic excavator 1 of the present embodiment has a boom swing function in which the boom 31 swings to the left and right with the leading end portion 42a as a starting point. The revolving frame 42 is equipped with a swing cylinder 42b (see FIG. 2). The swing cylinder 42b is constituted by a hydraulic cylinder and causes the boom 31 to swing by expansion/contraction.

The boom 31 has a shape bent forward at an obtuse angle, and is rotated in the up-down direction by expansion/contraction of the boom cylinder 31a. The boom cylinder 31a is located on the rear side (back side) of the boom 31. The boom cylinder 31a has a base end portion supported by the boom bracket 34 and a leading end portion connected to a bent portion of the boom 31, so that the boom cylinder 31a is movable freely in an expanding/contracting manner. The arm 32 is rotatably connected to the leading end portion of the boom 31. The arm 32 is rotationally moved in the up-down direction by expansion/contraction of the arm cylinder 32a. The arm cylinder 32a has a base end portion supported by the boom 31 and a leading end portion connected to the base end portion of the arm 32, so that the arm cylinder 32a is movable freely in an expanding/contracting manner. The bucket 33 is connected to the leading end portion of the arm 32 via a link mechanism 35 and turns in the up-down direction by expansion/contraction of the bucket cylinder 33a. The bucket cylinder 33a has a base end portion supported by the arm 32 and a leading end portion connected to the link mechanism 35 so as to allow expansion/contraction of the bucket cylinder 33a.

A work lamp 31P (see FIG. 2) is attached to the right side surface of the boom 31. When the operator performs work by the hydraulic excavator 1, the operator can turn on the work lamp 31P to brightly illuminate the front by operating a work lamp switch (not illustrated), as necessary.

The upper revolving body 4 is located above the lower traveling body 2 and is provided to revolve with respect to the lower traveling body 2. A driving section 41, the revolving frame 42, a revolving motor 43, and a machine room 44 are disposed in the upper revolving body 4. The upper revolving body 4 is driven by the revolving motor 43, which is a hydraulic motor, to revolve via a revolving bearing (not illustrated).

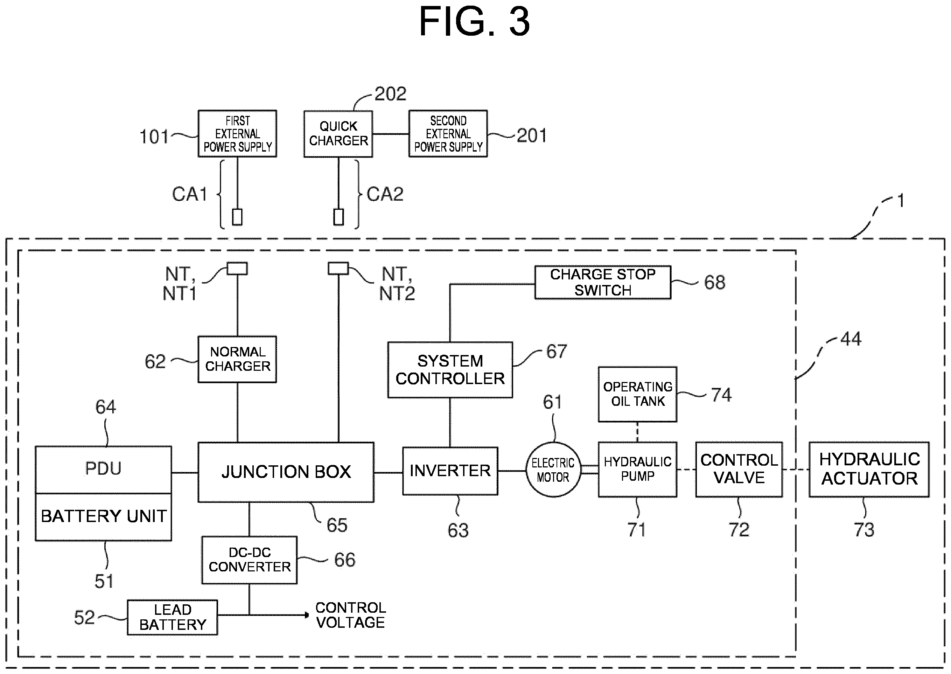

A driver seat 41a is disposed in the driving section 41. An operating portion 41b is disposed around the driver seat 41a. The operating portion 41b includes an operation lever, a button, a pedal, and the like. When the operator is seated in the driver seat 41a and operates the operating portion 41b, a hydraulic actuator 73 (see FIG. 3), which will be described later, is driven. This allows the lower traveling body 2 to travel, the work machine 3 to excavate, the upper revolving body 4 to revolve, and the like.

The machine room 44 is disposed below the driver seat 41a. In the machine room 44, the battery unit 51 is disposed. The battery unit 51 is constituted by, for example, a lithium-ion battery unit. The battery unit 51 stores electric power and supplies it to an electric motor 61 (see FIG. 3) to drive an electric motor 61. In other words, the hydraulic excavator 1 of the present embodiment is equipped with the electric motor 61 driven by the electric power output from the battery unit 51.

A lead battery 52 is also disposed in the machine room 44. The lead battery 52 outputs a low (for example, 12 V) DC voltage. The output from the lead battery 52 is supplied as a control voltage to, for example, a system controller 67 (see FIG. 3).

The upper revolving body 4 further includes a ROPS frame 45. The ROPS frame 45 is a guard provided to protect the operator in the event that the hydraulic excavator 1 falls over. The ROPS frame 45 is constituted by connecting a left frame 45L and a right frame 45R with a connecting frame 45B.

The left frame 45L and the right frame 45R are connected to a left front lower portion and a right front lower portion, respectively, of a floor 41F of the driving section 41. The left frame 45L and the right frame 45R each have an L-shape that extends upward from the floor 41F side and then bends backward. The connecting frame 45B extends in the left-right direction and is connected at one end and the other end to the rear ends of the left frame 45L and right frame 45R, respectively. The bent portion and the connecting portion of each frame are formed to be curved.

The left frame 45L and the right frame 45R each have an upper frame 45U and a lower frame 45D. The upper frame 45U and lower frame 45D are connected via a hinge 45a so that they can be rotated relative to each other. For example, when the hydraulic excavator 1 is loaded on a bed of a truck or the like and transported, the upper frame 45U is rotated forward with respect to the lower frame 45D with the hinge 45a a fulcrum. This allows the ROPS frame 45 to be folded, keeping the maximum height of the hydraulic excavator 1 low during transportation.

An indicator lamp 46 is attached to the ROPS frame 45. The indicator lamp 46 is constituted by a rotating lamp, for example, but it may also be constituted by an LED lamp. The indicator lamp 46 includes a first indicator lamp 46a and a second indicator lamp 46b. The first indicator lamp 46a and the second indicator lamp 46b are arranged side by side in the left-right direction on the connecting frame 45B of the ROPS frame 45 (see FIG. 2).

When the operator is seated in the driver seat 41a and puts on a seat belt, the first indicator lamp 46a is turned on in green. This enables workers operating around the hydraulic excavator 1 to recognize that the operator has put on the seat belt by seeing the first indicator lamp 46a.

The operator can turn on the second indicator lamp 46b by operating the beacon switch (not illustrated) in an operation box 400 at the start of work with the hydraulic excavator 1. The operator can turn on the second indicator lamp 46b by operating the beacon switch (not illustrated) at the end of work. This enables workers operating around the hydraulic excavator 1 to recognize whether the work is in progress by the hydraulic excavator 1 by seeing the second indicator lamp 46b. The operation box 400 is provided to stand in front of the floor 41F of the driving section 41.

A communication unit 47 is attached to the ROPS frame 45. The communication unit 47 is provided to acquire position information of the own vehicle (hydraulic excavator 1) by receiving a radio signal transmitted from a positioning satellite and to perform wireless communication with an external remote monitoring device.

### 2. Configuration of Electric System and Hydraulic System

FIG. 3 is a block diagram schematically illustrating a configuration of an electric system and a hydraulic system of the hydraulic excavator 1. For convenience, in this drawing, a path through which an electric current or an electric signal flows is indicated by a solid line, and a path through which the operating fluid flows is indicated by a broken line.

The hydraulic excavator 1 includes an electric motor 61, a normal charger 62, an inverter 63, a power distribution unit (PDU) 64, a junction box 65, a DC-DC converter 66, and a system controller 67 in the machine room 44. The system controller 67 is constituted by an electronic control unit (ECU), and performs electrical control of each part of the hydraulic excavator 1.

The electric motor 61 is driven by the electric power supplied from the battery unit 51 via the junction box 65 and the inverter 63. The electric motor 61 is constituted by a permanent magnet motor or an induction motor.

The normal charger 62 (also referred to as a power feeder) converts an AC voltage supplied from a first external power supply 101, which is an external power supply, via a first cable CA1 into a DC voltage. A first charging connector NT1 serving as a charging connector NT is disposed in the machine room 44. The first charging connector NT1 is a connector (also referred to as a socket) for normal charging.

By connecting the first cable CA1 to the first charging connector NT1, the AC voltage from the first external power supply 101 is supplied to the normal charger 62 via the first cable CA1 and the first charging connector NT1. The voltage (DC voltage) output from the normal charger 62 is supplied to the battery unit 51 via the junction box 65 and the PDU 64.

Thus, the battery unit 51 is charged. Charging of the battery unit 51 at this time is referred to as normal charging.

A second charging connector NT2 serving as the charging connector NT is also disposed inside the machine room 44. The second charging connector NT2 is a connector (socket) for quick charging. The AC voltage supplied from a second external power supply 201 for quick charging is converted to a DC voltage by a quick charger 202. To the quick charger 202, a base end portion of a second cable CA2 is connected.

By connecting the leading end portion of the second cable CA2 to the second charging connector NT2, the DC voltage from the quick charger 202 is supplied to the battery unit 51 via the second cable CA2, the second charging connector NT2, the junction box 65, and the PDU64. Thus, the battery unit 51 is charged. Charging of the battery unit 51 at this time is referred to as quick charging.

In the present embodiment, the first cable CA1 collectively refers to a wiring portion in which electric wires extend and a plug (a portion to be inserted into the first charging connector NT1) provided at the tip end of the wiring portion. Like the first cable CA1, the second cable CA2 also collectively refers to the wiring portion and the plug.

As described above, the hydraulic excavator 1 of the present embodiment includes the two charging connectors NT for supplying the electric power to the battery unit 51. The two charging connectors NT include the first charging connector NT1 and the second charging connector NT2. The first charging connector NT1 is a connector to which the first cable CA1 is connected. The first cable CA1 is an example of a charging cable for charging the battery unit 51. The second charging connector NT2 is a connector to which the second cable CA2 is connected. The second cable CA2 is another example of the charging cable. The arrangement of the two charging connectors NT in the hydraulic excavator 1 will be described below in detail.

The inverter 63 converts a DC voltage supplied from the battery unit 51 into an AC voltage and supplies it to the electric motor 61. Accordingly, the electric motor 61 is rotated. The supply of the AC voltage (current) from the inverter 63 to the electric motor 61 is performed based on a rotation command output from the system controller 67.

The PDU64 is a battery control unit that controls an internal battery relay to control input/output of the battery unit 51. The junction box 65 includes a charger relay, an inverter relay, fuses, and the like. The voltage output from the battery unit 51 is supplied to the inverter 63 via the PDU 64 and the junction box 65.

The DC-DC converter 66 steps down a high DC voltage (for example, 300 V) supplied from the battery unit 51 via the PDU64 and the junction box 65 to a low voltage (for example, 12 V). The voltage output from the DC-DC converter 66 is supplied to the system controller 67 or the like in the same manner as the output from the lead battery 52.

A charge stop switch 68 is provided in the machine room 44. The charge stop switch 68 is a switch that accepts a charge stop instruction from the operator. When the operator operates (for example, presses) the charge stop switch 68, the system controller 67 controls the PDU 64 or the junction box 65 based on a stop signal from the charge stop switch 68 to cut off a charging path to the battery unit 51. This allows the operator to safely unplug the first cable CA1 from the first charging connector NT1.

The operator can safely unplug the second cable CA2 from the second charging connector NT2.

As described above, the hydraulic excavator 1 includes the charge stop switch 68.

When at least one of the first charging connector NT1 and the second charging connector NT2 has an interlock function, the charge stop switch 68 may have a function of unlocking the interlock when operated. The interlock means a mechanical lock which is engaged to prevent the charging cable from being detached from the charging connector when the charging cable is inserted into the charging connector.

A plurality of hydraulic pumps 71 are connected to a rotary shaft (output shaft) of the electric motor 61. The plurality of hydraulic pumps 71 include variable displacement pumps and fixed displacement pumps. FIG. 2 illustrates only one hydraulic pump 71 as an example. Each hydraulic pump 71 is connected to an operating oil tank 74.

When the hydraulic pump 71 is driven by the electric motor 61, an operating oil in the operating oil tank 74 is supplied to the hydraulic actuator 73 via the control valve 72. Thus, the hydraulic actuator 73 is driven. The control valve 72 is a direction switching valve that controls the flow direction and the flow rate of the operating oil supplied to the hydraulic actuator 73. The hydraulic actuator 73 includes hydraulic motors (for example, the left and right traveling motors 22 and a revolving motor 43 illustrated in FIGS. 1 and 2) and hydraulic cylinders (for example, the boom cylinder 31a, the arm cylinder 32a, and the bucket cylinder 33a illustrated in FIG. 1).

The control valve 72 has a spool for adjusting the discharge amount of the operating oil to the hydraulic actuator 73. The spool is connected to the operating portion 41b (for example, a travel lever) disposed in the driving section 41 via a link mechanism. This allows the discharge amount of the operating oil in the control valve 72 to be mechanically controlled by operating the operating portion 41b. As a control system of the control valve 72, other systems such as a pilot system and an electromagnetic system may be adopted.

The control valve 72 is disposed in the operation box 400 illustrated in FIGS. 1 and 2.

### 3. Arrangement of Each Part in Machine Room

As illustrated in FIG. 2, a right hood 44R, which constitutes the right side wall of the machine room 44, is equipped with a lid 44a that can be opened and closed. The lid 44a is fitted into an opening 44P penetrating through the right hood 44R in the left-right direction. The opening 44P is rectangular in a side view, but may be oval or other shapes. The lid 44a is formed in a shape corresponding to the opening 44P and fitted into the opening 44P.

For example, the lid 44a is rotatably provided to open from the top. The lid 44a may be rotatably provided to open in other directions (for example, to open from the left, right, or bottom). The two charging connectors NT described above (see FIG. 3) are also disposed on the left side of the lid 44a, that is, inside the machine room 44. Therefore, a worker (or may be an operator) who performs charging can access the two internal charging connectors NT through the opening 44P by rotating and opening the lid 44a, that is, the worker can insert a charging cable into the charging connectors NT.

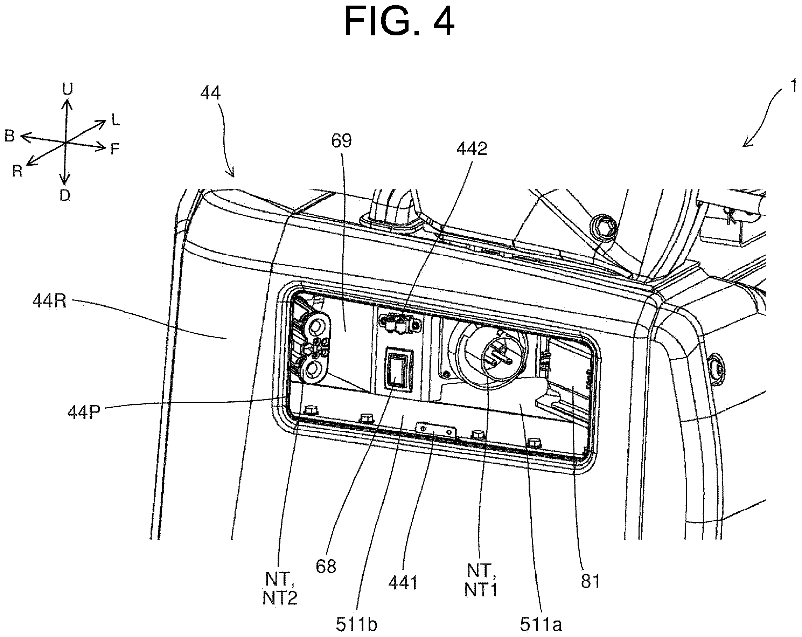

FIG. 4 is an enlarged perspective view illustrating the right hood 44R of the hydraulic excavator 1. For convenience, the lid 44a of FIG. 2 is omitted in FIG. 4. On the right hood 44R, a hinge 441 for opening and closing is provided at the lower edge of the opening 44P. A lower end portion of the lid 44a is attached to the right hood 44R via the opening/closing hinge 441. This allows the lid 44a to be opened from the top and to rotate via the opening/closing hinge 441.

A catch 442 is provided on a support member 69, which will be described later, disposed in the machine room 44. When the lid 44a is closed, a projection (not illustrated) provided on the inner side of the lid 44a (on the side where the charging connector NT is disposed) is trapped by the catch 442, whereby the lid 44a is held in the closed state. To open the lid 44a, the lid 44a may be rotated and opened from the top. That is, when the lid 44a is rotated, the projection is simultaneously disengaged from the catch 442. Thus, the held state of the lid 44a is easily released.

When the lid 44a is rotated and opened from the top, the two charging connectors NT, that is, the first charging connector NT1 and the second charging connector NT2, as well as the charge stop switch 68 and a fuse box 81 are exposed from the opening 44P. The arrangement of each part in the machine room 44 is described below.

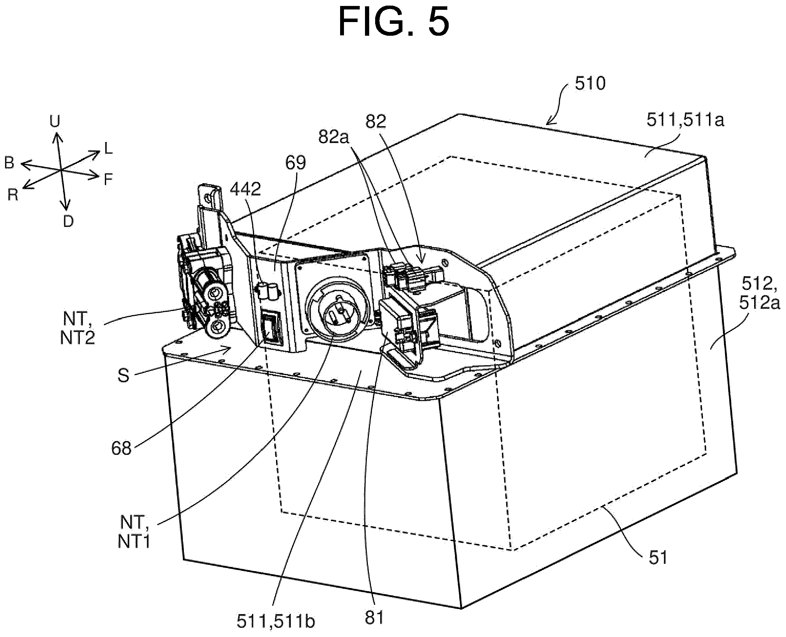

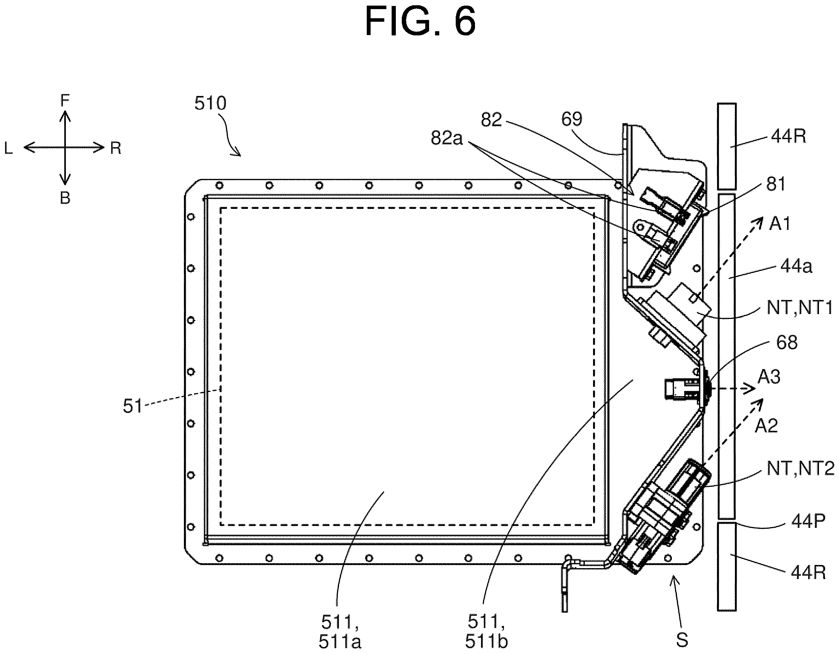

FIG. 5 is a perspective view illustrating an internal configuration of the machine room 44 (particularly the configuration in the vicinity of the charging connector NT). FIG. 6 is a plan view illustrating the internal configuration of the machine room 44. The battery unit 51 illustrated in FIG. 1 and the like is housed in a case 510. The case 510 includes an upper case 511 and a lower case 512.

The upper case 511 has an upper case body 511a and an upper case flange 511b. The upper case body 511a is formed in a box shape with an opening on the lower side. The upper case flange 511b extends from the outer peripheral edge of the lower portion of the upper case body 511a to the outside of the case in each of the front, rear, left, and right directions.

Similarly, the lower case 512 has a lower case body 512a and a lower case flange (not illustrated). The lower case body 512a is formed in a box shape with an opening on the upper side. The lower case flange extends from the outer peripheral edge of the upper portion of the lower case body 512a to the outside of the case in each of the front, rear, left, and right directions.

The battery unit 51 is placed between the upper case body 511a and the lower case body 512a in the up-down direction to house the battery unit 51 inside, and the upper case flange 511b and the lower case flange are fastened using, for example, bolts. Thus, the battery unit 51 is housed in the case 510. The number of battery units 51 housed in the case 510 is not limited, and may be one or more.

As illustrated in FIGS. 5 and 6, the upper case body 511a is shorter in width in the left-right direction than the lower case body 512a. In addition, the upper case body 511a is located closer to the left than the lower case body 512a is. Such a shape of the case 510 allows the battery unit 51 to be housed in the case 510 inside the outer shape of the upper case body 511a in a plan view, as illustrated in FIG. 6. Since the upper case body 511a is closer to the left side than the lower case body 512a, a narrow space S is present on the right side of the upper case body 511a, that is, between the upper case body 511a and the right hood 44R (above the upper case flange 511b located on the right side of the upper case body 511a). In the present embodiment, the space S is used as an arrangement space for the charging connectors NT and other components. In other words, the space S between the battery unit 51 housed in the case 510 and the side portion of the machine room 44 (right hood 44R) is used as a space for the arrangement of the charging connector NT and other components.

In the layout of the present embodiment, the electrical components such as the lead battery 52 and the DC-DC converter 66 are disposed on the left side of the case 510 (between the case 510 and the left hood of the machine room 44) in the machine room 44. Therefore, when the capacity of the battery unit 51 is increased (when a large-sized battery unit 51 is mounted), the space S is inevitably narrowed. In the present embodiment, by appropriately setting the direction in which the charging connectors NT are disposed, the charging connectors NT can be disposed even in such a narrow space S. This will be described in more detail below.

### Arrangement of Charging Connector

As illustrated in FIGS. 5 and 6, in the machine room 44, the first charging connector NT1 for normal charging and the second charging connector NT2 for quick charging are disposed above the upper case flange 511b. The first charging connector NT1 is disposed in front of the second charging connector NT2. The first charging connector NT1 may be disposed at the rear of the second charging connector NT2. That is, the two charging connectors NT are disposed at different positions in the front-rear direction in the machine room 44.

The first charging connector NT1 and the second charging connector NT2 are disposed on the left side of the lid 44a in the machine room 44 that houses the battery unit 51. That is, the two charging connectors NT are arranged on the side of the lid 44a that can be opened and closed on the side portion (here, the right hood 44R) of the machine room 44.

Here, in the plan view of FIG. 6, the orientation of the first charging connector NT1 is defined as a direction A1, and the orientation of the second charging connector NT2 is defined as a direction A2. The orientation of the first charging connector NT1 refers to a direction in which the first cable CA1 (see FIG. 3) is inserted into the first charging connector NT1 (the direction from the end point to the start point of the insertion direction). The orientation of the second charging connector NT2 refers to the direction in which the second cable CA2 (see FIG. 3) is inserted into the second charging connector NT2 (the direction from the end point to the start point of the insertion direction). **In** the present embodiment, the directions A1 and A2 are parallel to each other. That is, the two charging connectors NT are disposed side by side in the same direction in the machine room 44.

The term "same direction" here refers to the same direction in the front-back, left-right, and up-down directions, but the "same direction" also covers the case in which both directions face front right or front left, for example. For example, in a plan view, when the first charging connector NT1 faces front right and the second charging connector NT2 also faces front right, it can be considered that these two charging connectors NT face the same direction. The same consideration applies to the "same direction" which will appear below.

Furthermore, as illustrated in FIG. 6, the orientation of the first charging connector NT1 (direction A1) is oblique to the lid 44a. Similarly, the orientation (direction A2) of the second charging connector NT2 is also oblique to the lid 44a. The term "obliquely to the lid 44a" means that an angle formed by the lid 44a and each direction (direction A1, direction A2) is an angle other than 0 degree and 90 degrees. Thus, the two charging connectors NT are disposed obliquely to the lid 44a. The orientation (the above-described angles) of the two charging connectors NT with respect to the lid 44a can be appropriately set in accordance with the left-right width of the space S.

Two charging connectors NT are supported by the support member 69. The support member 69 is attached to the upper case flange 511b. This enables the arrangement of the two charging connectors NT described above to be easily achieved in the machine room 44. The support member 69 is formed by, for example, bending one metal flat plate, but may be formed by connecting a plurality of metal flat plates by welding or the like.

As described above, in the present embodiment, the two charging connectors NT are disposed in the same direction and obliquely to the lid 44a in the machine room 44. This allows the two charging connectors NT to be efficiently arranged in the limited narrow space S on the side of the lid 44a in the machine room 44 without increasing the size of the machine room 44 itself, even when the large-capacity (large-sized) battery unit 51 is housed in the machine room 44. Moreover, the two charging connectors NT can be arranged in the limited narrow space S by a simple method of adjusting the orientations of the two charging connectors NT. That is, it is possible to realize the electric hydraulic excavator 1 capable of easily securing the arrangement space of the two charging connectors NT in spite of the compact configuration, even when the battery unit 51 having a large capacity is mounted.

In particular, as illustrated in FIG. 6, in the configuration in which the two charging connectors NT are disposed between the battery unit 51 and the side portion (right hood 44R) of the machine room 44, when the battery unit 51 is increased in size, an empty space on the side of the battery unit 51 in the machine room 44 is narrowed. Therefore, the arrangement method of the two charging connectors NT as in the present embodiment is very effective in the configuration in which the two charging connectors NT are arranged between the battery unit 51 and the side portion of the machine room 44.

The two charging connectors NT are disposed at different positions in the front-rear direction. This allows the two charging connectors NT to be arranged efficiently in the limited space S in the machine room 44 by appropriately setting the orientations of the two charging connectors NT as described above. When the lid 44a on the side portion of the machine room 44 is opened, it is possible to access (insert the charging cable into) both of the two charging connectors NT disposed in the front-rear direction.

### Arrangement of Charge Stop Switch

As illustrated in FIGS. 5 and 6, in the present embodiment, the charge stop switch 68 is disposed between the first charging connector NT1 and the second charging connector NT2 when viewed from the side. In other words, the charge stop switch 68 is disposed between the two charging connectors NT in the front-rear direction. The charge stop switch 68 is supported by the support member 69 similarly to the two charging connectors NT.

In the arrangement of the charge stop switch 68 described above, the worker can stop charging by operating the charge stop switch 68 regardless of which of the two charging connectors NT is being used for charging. Therefore, for example, as compared with a configuration in which the charge stop switch 68 is provided corresponding to each charging connector NT, the worker does not have to wonder which switch to operate, thus improving convenience when stopping the charge.

In particular, in the present embodiment, as illustrated in FIG. 6, the charge stop switch 68 is disposed to face the lid 44a on the side portion of the machine room 44. That is, the charge stop switch 68 is disposed in the machine room 44 to face in the direction of the lid 44a (here, the right direction). Here, when the orientation of the charge stop switch 68 is in a direction A3, the direction A3 is perpendicular to the lid 44a, but may also be a direction slightly tilted (for example, within 10 degrees) from a perfectly vertical direction.

When the charge stop switch 68 is disposed to face in the direction of the lid 44a, the worker only needs to press the charge stop switch 68 straight to the left when operating (for example, pressing) the charge stop switch 68. That is, in this case, the worker can easily operate (press) the charge stop switch 68.

### Arrangement of Fuse Box

As illustrated in FIGS. 4 to 6, the fuse box 81 is further supported by the support member 69. The fuse box 81 is a box in which fuses provided in the wiring (electric circuit) of the electric system illustrated in FIG. 3 are collected. Fuses protect electric devices and circuits by opening (cutting off) the circuit by fusing themselves when an excessive current above the rated value flows through the circuit due to some abnormality.

The fuse box 81 is disposed in front of the first charging connector NT1 in the machine room 44. As described above, the first charging connector NT1 is disposed in front of the second charging connector NT2. Therefore, the fuse box 81 is also disposed in front of the two charging connectors NT. The hydraulic excavator 1 of the present embodiment is equipped with the fuse box 81 described above.

Since the fuse box 81 is disposed as described above in the machine room 44, the worker can open the lid 44a on the side of the machine room 44 and access the fuse box 81 through the opening 44P. This facilitates the maintenance such as inspection and replacement of the fuses collected in the fuse box 81 before the start of work, for example, by the hydraulic excavator 1.

### Arrangement of Communication Connector

As illustrated in FIGS. 5 and 6, a communication connector 82a is further supported by the support member 69. The communication connector 82a is a connector provided at a relay point of a wire connecting the system controller 67 and an electric component (electric device). In the present embodiment, two communication connectors 82a are provided, but the number of communication connectors 82a is not limited to two, and may be one, three, or more. At least one communication connector 82a is housed in a communication connector housing 82. The communication connector housing 82 is provided, for example, above the fuse box 81.

When performing maintenance of the system controller 67 (setting, confirmation of operation, or the like), the worker removes the wire from the communication connector 82a and connects a cable connected to a terminal device such as a personal computer to the communication connector 82a. This enables communication between the terminal device and the system controller 67 and allows performing the maintenance of the system controller 67.

The communication connector housing 82 (in particular, the communication connector 82a) is disposed in front of the first charging connector NT1 in the machine room 44. As described above, the first charging connector NT1 is disposed in front of the second charging connector NT2. Therefore, the communication connector 82a is disposed in front of the two charging connectors NT. As described above, the hydraulic excavator 1 according to the present embodiment includes the communication connector 82a for communicating with the system controller 67.

In the machine room 44, with the communication connector 82a arranged as described above, the devices for maintenance (the fuse box 81 and the communication connector 82a) are collected in the vicinity of the charging connectors NT which can be accessed easily. Thus, good maintenance can be ensured.

In particular, as illustrated in FIG. 5, the communication connectors 82a are disposed above the fuse box 81. In other words, the communication connectors 82a are aligned with the fuse box 81 in the up-down direction. In this case, the devices that need maintenance can be arranged collectively and compactly in front of the two charging connectors NT. Therefore, the configuration in which the communication connectors 82a and the fuse box 81 are aligned in the up-down direction is very effective in the small hydraulic excavator 1 where the devices described above that need maintenance needs to be arranged in the narrow space S.

When performing the maintenance of the system controller 67, the maintenance is usually performed by a service person as specialized knowledge is required. As described above, when the communication connectors 82a (the communication connector housing 82) are disposed above the fuse box 81, the communication connectors 82a can be disposed at the upper inner portion of the lid 44a (that is, at a position hidden by the right hood 44R) when viewed from the side. This makes it difficult for general users who do not have specialized knowledge to access the communication connectors 82a. Accordingly, this reduces the risk of generating inconvenience (such as incorrect settings of the system controller 67) by performing the maintenance of the system controller 67 by general users.

### 4. Other Arrangements of Charging Connector and Other Components

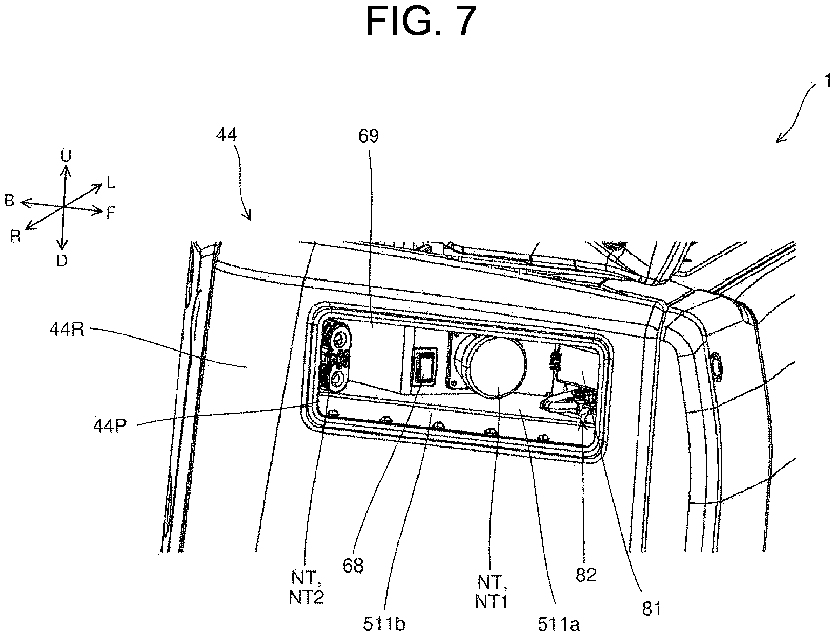

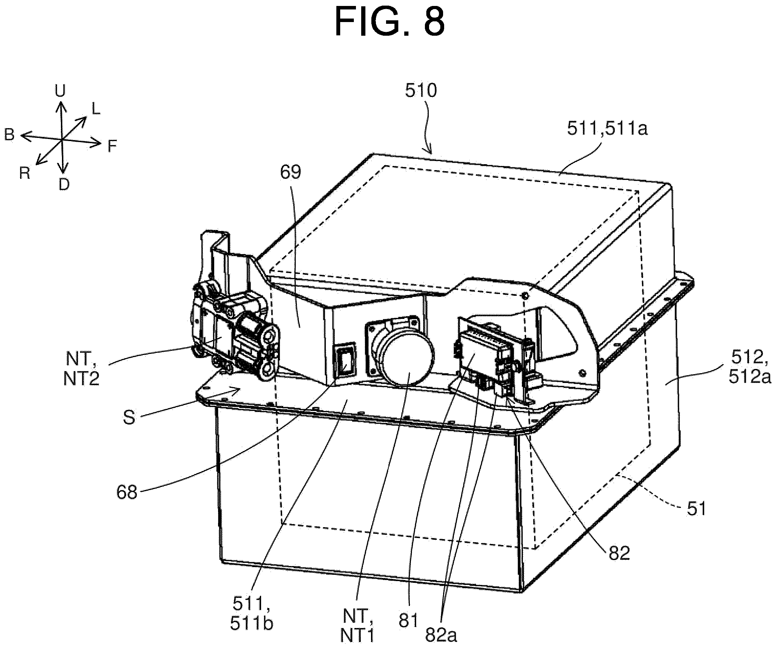

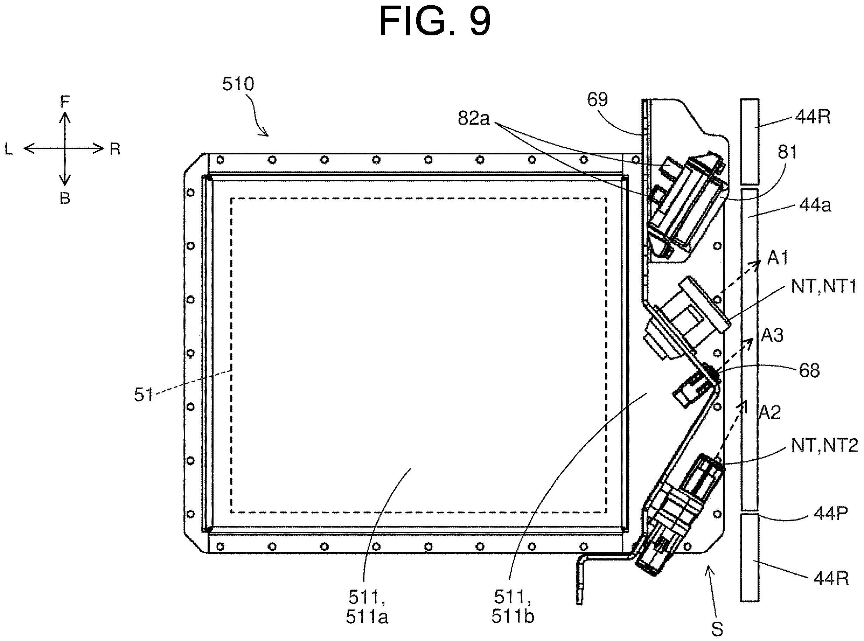

FIG. 7 is an enlarged view of the right hood 44R of the hydraulic excavator 1 with the lid 44a omitted from the drawing, and illustrates another arrangement example of the charging connectors NT and other components in the machine room 44. FIGS. 8 and 9 are a perspective view and a front view, respectively, illustrating a configuration of the interior of the machine room 44 in the vicinity of the charging connectors NT illustrated in FIG. 7.

In the example of FIGS. 7 to 9, the orientation (direction A3) of the charge stop switch 68 is the same as the orientation (direction A1) of the first charging connector NT1, and the communication connectors 82a (communication connector housing 82) are provided below the fuse box 81. The configuration is the same as that illustrated in FIGS. 1 to 6 except for these points. This will be described in detail below.

The charge stop switch 68 is disposed adjacent to the first charging connector NT1 (side by side with the first charging connector NT1). Similar to FIG. 4 and the like, the first charging connector NT1 (the other charging connector NT) is disposed in front of the second charging connector NT2 (one charging connector NT).

With such an arrangement, when stopping the charging using the first charging connector NT1, the operator can immediately find and operate the charge stop switch 68 disposed next to the first charging connector NT1. This makes it easier for the worker to immediately instruct the charge stop.

The charge stop switch 68 may be disposed adjacent to the first charging connector NT1 on the side opposite to the second charging connector NT2. For example, the charge stop switch 68 may be disposed on the left front side of the first charging connector NT1 in FIG. 9.

However, in terms of the ease of instructing the charge stop using either of the two charging connectors NT by operating one charging stop switch 68, it is desirable for the single charge stop switch 68 to be disposed between the two charging connectors NT when viewed from the side. In other words, as illustrated in FIGS. 7 to 9, it is desirable that the charge stop switch 68 is disposed adjacent to the second charging connector NT2 (one charging connector) side with respect to the first charging connector NT1 (the other charging connector). For example, it is desirable to dispose the charge stop switch 68 on the right rear side of the first charging connector NT1, as illustrated in FIG. 9.

When the orientation of the charging connector NT and the orientation of the charge stop switch 68 are in the same direction, the direction in which the charging cable is inserted into the charging connector NT coincides with the direction in which the charge stop switch 68 is pressed. By aligning the direction of charging (when inserting the cable) and the direction of the charge stop (when pressing the switch) in this way, the worker can work (connect the cable) and operate (press the switch) from the same direction for both starting charging (inserting the charging cable into the charging connector NT) and ending charging (operating the charge stop switch 68). That is, in this case, the worker can easily perform the charging operation and the charge stop operation. In this respect, as illustrated in FIG. 9, it is desirable that the charge stop switch 68 is disposed to face in the same direction as the two charging connectors NT. For example, it is desirable that the orientation of the first charging connector NT1 (direction A1), the orientation of the second charging connector NT2 (direction A2), and the orientation of the charge stop switch 68 (direction A3) are all in the same direction (direction facing the front right).

As illustrated in FIG. 8, although the communication connectors 82a are disposed below the fuse box 81, the arrangement of the communication connectors 82a aligned with the fuse box 81 in the up-down direction is similar to the arrangement of FIG. 5 and the like. In other words, in FIG. 8, the devices that need maintenance (communication connectors 82a and fuse box 81) are compactly arranged collectively in front of the two charging connectors NT.

In particular, in the configuration in which the communication connectors 82a (communication connector housing 82) is disposed below the fuse box 81, when the lid 44a is opened, the communication connector 82a is exposed through the opening 44P, as illustrated in FIG. 7. This makes it easier for service personnel to access the communication connectors 82a and to perform maintenance of the system controller 67.

### 5. Supplemental Description

The hydraulic excavator 1 may have a configuration that uses a combination of a hydraulic device such as the hydraulic actuator 73 (for example, a hydraulic motor or a hydraulic cylinder), and an actuator driven by electric power. Examples of the actuator driven by electric power include an electric traveling motor, an electric cylinder, and an electric swing motor.

In the present embodiment, the hydraulic excavator 1, which is a construction machine, has been described as an example of the work machine, but the work machine is not limited to the hydraulic excavator 1 and can be other construction machines such as wheel loaders and compact track loaders. Moreover, the work machine may be an agricultural machine such as a combine harvester, a tractor or the like.

### 6. Appendix

The work machine described in the present embodiment can also be expressed as described in the following appendices.
Appendix 1. A work machine, including
   an electric motor driven by electric power output from a battery unit, and further including
   two charging connectors that supply electric power to the battery unit, in which
   the two charging connectors are disposed side by side facing in the same direction in a machine room housing the battery unit on the side of a lid which is installed in a manner capable of being opened and
   closed on the side of the machine room, while being arranged obliquely to the lid.
Appendix 2. The work machine according to appendix (1), in which
   the two charging connectors are disposed between the battery unit and the side of the machine room.
Appendix 3. The work machine according to appendix (1) or (2), in which
   the two charging connectors are disposed at different positions in the front-back direction.
Appendix 4. The work machine according to appendix (3), further including
   a charge stop switch that accepts a charge stop instruction for the battery unit, in which
   the charge stop switch is disposed between the two charging connectors in the front-back direction.
Appendix 5. The work machine according to appendix (4), in which
   the charge stop switch is disposed facing the lid.
Appendix 6. The work machine according to appendix (3), further including
   a charge stop switch that accepts a charge stop instruction for the battery unit, in which
   the charge stop switch is disposed adjacent to (side by side with) a second charging connector of the two charging connectors disposed in front of a first charging connector of the two charging connectors.
Appendix 7. The work machine according to appendix (6), in which
   the charge stop switch is disposed adjacent to the first charging connector side with respect to the second charging connector.
Appendix 8. The work machine according to appendix (7), in which
   the charge stop switch is disposed facing in the same direction as the two charging connectors.
Appendix 9. The work machine according to any one of appendices (3) to (8), further including
   a fuse box disposed in front of the two charging connectors.
Appendix 10. The work machine according to appendix (9), further including
   a communication connector disposed in front of the two charging connector and configured to communicate with a controller of the work machine.
Appendix 11. The work machine according to appendix (10), in which
   the communication connector is aligned with the fuse box in the up-down direction.
Appendix 12. The work machine according to appendix (11), in which
   the communication connector is disposed above the fuse box.
Appendix 13. The work machine according to appendix (11), in which
   the communication connector is disposed below the fuse box.

Although the embodiment of the present invention has been described above, the scope of the present invention is not limited thereto, and the present invention can be implemented by expanding or changing it without departing from the gist of the invention.

### INDUSTRIAL APPLICABILITY

The present invention is applicable to work machines such as construction machines and agricultural machines.

### REFERENCE SIGNS LIST

1 Hydraulic excavator (work machine)
44 Machine room
44R Right hood (side)
44a Lid
51 Battery unit
61 Electric motor
67 System controller
68 Charge stop switch
81 Fuse box
82a Communication connector
NT Charging connector
NT1 First charging connector
NT2 Second charging connector

## Claims

1. A work machine, comprising: an electric motor driven by electric power output from a battery unit, and further comprising:
two charging connectors that supply electric power to the battery unit, wherein
the two charging connectors are disposed side by side facing in an identical direction in a machine room housing the battery unit on a side of a lid which is installed in a manner capable of being opened and closed on a side of the machine room, while being arranged obliquely to the lid.

2. The work machine according to claim 1, wherein
the two charging connectors are disposed between the battery unit and the side of the machine room.

3. The work machine according to claim 1, wherein
the two charging connectors are disposed at different positions in a front-back direction.

4. The work machine according to claim 3, further comprising: a charge stop switch that accepts a charge stop instruction for the battery unit, wherein
the charge stop switch is disposed between the two charging connectors in the front-back direction.

5. The work machine according to claim 4, wherein
the charge stop switch is disposed facing the lid.

6. The work machine according to claim 3, further comprising: a charge stop switch that accepts a charge stop instruction for the battery unit, wherein
the charge stop switch is disposed adjacent to a second charging connector of the two discharging connectors arranged in front of a first charging connector of the two charging connectors.

7. The work machine according to claim 6, wherein
the charge stop switch is disposed adjacent to the first charging connector side with respect to the second charging connector.

8. The work machine according to claim 7, wherein
the charge stop switch is disposed facing in a direction identical to a direction of the two charging connectors.

9. The work machine according to claim 3, further comprising: a fuse box disposed in front of the two charging connectors.

10. The work machine according to claim 9, further comprising: a communication connector disposed in front of the two charging connectors to communicate with a controller of the work machine.

11. The work machine according to claim 10, wherein the communication connector is aligned with the fuse box in the up-down direction.

12. The work machine according to claim 11, wherein the communication connector is disposed above the fuse box.

13. The work machine according to claim 11, wherein the communication connector is disposed below the fuse box.
